# EUROPEAN PATENT APPLICATION

(11) **EP 4 826 226 A1**
(43) Date of publication of application: **21.10.2026**
(21) Application number: 24918978.8
(22) Date of filing: 09.12.2024
(51) Int. Cl.: F01N 3/04, F01N 5/04, B63H 21/32, B63B 13/00, B63J 4/00, F03B 7/00, B63J 3/04

(54) **SCRUBBER SYSTEM HAVING HYDROELECTRIC POWER GENERATION UNIT USING EXHAUST GAS CLEANING WATER**

(30) Priority: 19.01.2024 KR 20240008640
(71) Applicant: Global Echo Co., Ltd., Ulju-gun, Ulsan 44988 (KR)
(72) Inventor: SEO, Min Su, Seoul 06373 (KR)
(74) Representative: Murgitroyd & Company
(86) International application number: PCT/KR2024/020032
(87) International publication number: WO 2025/154953

(57) **Abstract**

The present invention relates to a scrubber system having a hydroelectric power generation unit using exhaust gas cleaning water, the scrubber system generating electrical power via turbine by using the head of cleaning water used in a scrubber and supplying to places of need. The scrubber system having a hydroelectric power generation unit using exhaust gas cleaning water according to the present invention comprises: a scrubber; a seawater supply unit; a cooling unit; a water treatment unit; a hydroelectric power generation unit; and a monitoring unit.

## Description

### Technical Field

The present disclosure relates to a scrubber system having a hydroelectric power generation unit using exhaust gas cleaning water, the scrubber system generating electric power via a turbine using the head of cleaning water used in a scrubber, and supplying the electric power to places where it is required.

### Background Art

Typically, ships are equipped with and operate main engines that drive propellers for ship propulsion, multiple auxiliary engines for power generation to supply electricity to various onboard equipment and fittings, and heating systems such as boilers.

Meanwhile, ships are equipped with multiple cooling systems to cool their machinery, and these cooling systems are designed to draw seawater from sea as cooling water and use it and discharge it back into sea. Moreover, exhaust gases emitted after combustion from diesel engines of ships contain numerous air pollutants, including floating microparticle such as particulate matter and fine dust, nitrogen oxides (NOx), and sulfur oxides (SOx), thus the exhaust gases cause environmental pollution.

Accordingly, to remove harmful substances contained in these exhaust gases, ships are equipped with selective catalytic reduction (SCR) systems to remove nitrogen oxides, scrubber systems (SOx removal) to reduce sulfur oxides, and diesel particulate filters (DPF) to remove particulate materials.

Specifically, the scrubber system uses seawater to dissolve sulfur oxides (SOx) contained in the exhaust gas and remove particulate matter, such as soot, and the seawater that reacts with the exhaust gas is discharged overboard through a cleaning water discharge tube into the sea after passing through seawater monitoring equipment.

Therefore, a technology is required to further increase the utilization of cleaning water used in the scrubber system by using it to generate additional electric power via a turbine.

(Patent Document 1) Korean Patent No. 10-1940954 (Seawater circulating system having seawater supplying function and seawater stirring function, January 21, 2019)

(Patent Document 2) Korean Patent No. 10-2221283 (Seawater interconnecting system for scrubber and cooler of ship, March 02, 2021)

### Disclosure

### Technical Problem

Accordingly, the present disclosure has been made keeping in mind the above problems occurring in the prior art, and an objective of the present disclosure is to provide a scrubber system having a hydroelectric power generation unit using exhaust gas cleaning water, the scrubber system generating electric power via a turbine using the head of cleaning water used in a scrubber and supplying the electric power to places where it is required.

### Technical Solution

According to an embodiment of the present disclosure, there is provided a scrubber system having a hydroelectric power generation unit using exhaust gas cleaning water, the scrubber system including: a scrubber including a scrubber casing panel provided at a side surface of a smoke stack discharging exhaust gas discharged from an engine of a ship outward, a seawater injection module injecting seawater into introduced exhaust gas branched to the scrubber casing panel to dissolve sulfur oxides while cooling exhaust gas, and an outlet formed on a lower surface of the scrubber casing panel and discharging cleaning water used to clean exhaust gas; a seawater supply unit including a seawater pump pumping seawater from outside of the ship through a sea chest and supplying the seawater to the seawater injection module, and a seawater adjustment valve adjusting the supply amount of seawater in a seawater supply tube connected from the seawater pump to the seawater injection module to adjust the injection amount of the seawater injection module; a cooler supplying cooling water to cool the engine and recover the cooling water; a water treatment unit treating cleaning water in a cleaning water discharge tube communicating with the outlet of the scrubber by agitating it with cooling water supplied from the cooler, and discharging the treated cleaning water from the ship; a hydroelectric power generation unit formed at the cleaning water discharge tube at a rear end of the water treatment unit, and storing the amount of power generated by hydraulic turbine generation using the head of cleaning water falling from the scrubber along the cleaning water discharge tube directly or in a battery to supply the generation power amount to the seawater supply unit, the cooler, or the water treatment unit; and a monitoring unit controlling the seawater supply unit, the cooler, and the water treatment unit, monitoring each load of the seawater supply unit, the cooler, and the water treatment unit, and the generation power amount of the hydroelectric power generation unit, and distributing the generation power amount according to each load.

At this point, the hydroelectric power generation unit may include a turbine cover including an inlet and an outlet to communicate with the cleaning water discharge tube, a turbine rotatably coupled to the turbine cover and rotated by cleaning water, which is introduced through the inlet and falls and is discharged through the outlet, and a generation module generating power by a coil and a permanent magnet formed at a rear end of a shaft of the turbine.

Furthermore, the turbine may include a blade coupled to the shaft, a blade formed on an outer circumferential surface of a rotation frame rotated in a cylindrical rotation space formed in the turbine cover, or a screw-type blade inserted into and rotated in a rotation guide tube coupled to and located between the inlet and the outlet.

Furthermore, the cleaning water discharge tube may include a vertical tube formed upright through two or more layers of decks, and the turbine may be coupled to a terminal end of the vertical tube.

Furthermore, the scrubber system may further include: a cleaning water branch tube branched from the cleaning water discharge tube at a rear end of the water treatment unit, and an auxiliary water treatment unit coupled to the cleaning water branch tube, wherein the monitoring unit may allow cleaning water to be discharged from the ship by bypassing the hydroelectric power generation unit through the cleaning water branch tube according to each load of the seawater supply unit, the cooler, and the water treatment unit.

Furthermore, the hydroelectric power generation unit may be disposed at the bottom deck of a body of the ship.

Furthermore, the turbine of the hydroelectric power generation unit may replace a function of an agitator of the water treatment unit.

### Advantageous Effects

According to the present disclosure, it is possible to generate electric power via the turbine using the head of cleaning water used in the scrubber and supply the electric power to places where it is required.

### Description of Drawings

FIG. 1 is a block diagram of a scrubber system having a hydroelectric power generation unit using exhaust gas cleaning water according to an embodiment of the present disclosure.
FIGS. 2 and 3 are embodiment views of the scrubber system having a hydroelectric power generation unit using exhaust gas cleaning water of FIG. 1.
FIGS. 4 and 5 are views showing the hydroelectric power generation unit separated from FIG. 2.

### [Description of Reference Numeral]

110: scrubber 111: scrubber casing panel
120: seawater supply unit 121: sea chest
122: seawater pump 123: seawater supply tube
124: seawater adjustment valve 130: cooler
140: water treatment unit 141: cleaning water discharge tube
143: seawater pump
150: hydroelectric power generation unit 151: turbine cover
152: shaft 153: generation module
160: monitoring unit 171: cleaning water branch tube
172: auxiliary water treatment unit 181: storage tank

### Bes Mode

Hereinbelow, an exemplary embodiment of the present disclosure will be described in detail with reference to accompanying drawings.

According to the embodiment of the present disclosure, a scrubber system having a hydroelectric power generation unit using exhaust gas cleaning water includes a scrubber 110 injecting seawater to purify exhaust gas of a ship, a seawater supply unit 120 introducing seawater through a sea chest and supplying it to the scrubber 110, a cooler 130 cooling an engine with cooling water, a water treatment unit 140 treating cleaning water after purifying exhaust gas to discharge the cleaning water from the ship, a hydroelectric power generation unit 150 generating power in hydraulic turbine generation using the head of the cleaning water falling from the scrubber 110, and a monitoring unit 160 controlling the seawater supply unit 120, the cooler 130, and the water treatment unit 140, monitoring each load of the seawater supply unit 120, the cooler 130, and the water treatment unit 140 and the generation power amount of the hydroelectric power generation unit 150, and distributing the generation power amount according to each load, and the scrubber system rotates a turbine using the head of cleaning water and generates and utilizes additional power.

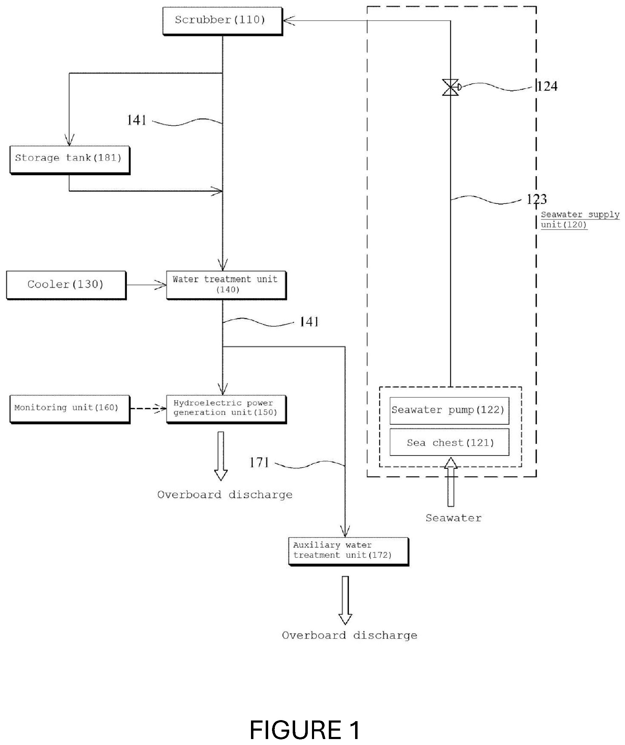

Hereinbelow, referring to FIGS. 1 to 5, the above-described scrubber system having a hydroelectric power generation unit using exhaust gas cleaning water will be described in detail.

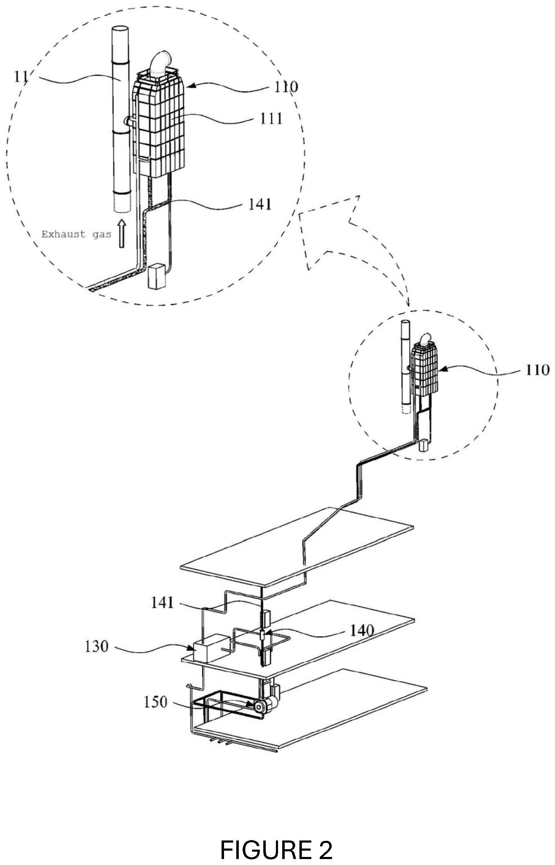

First, referring to FIGS. 1 and 2, the scrubber 110 includes a scrubber casing panel 111 installed on a side surface of an upper end portion of a smoke stack (not shown) that discharges exhaust gas outward from an engine (not shown) of the ship, e.g., a main engine or a generation engine, and forming an exterior shape, one or more stages of seawater injection modules (not shown) injecting seawater into introduced exhaust gas branched to the scrubber casing panel 111 from an exhaust tube 11 communicating with the engine to cool exhaust gas below a certain temperature, and dissolving sulfur oxides (SO X) and removing particulate matter such as soot, etc., and an outlet formed on a lower surface of the scrubber casing panel 111 and connected to a cleaning water discharge tube 141 to discharge cleaning water used to purify exhaust gas.

Next, referring to FIGS. 1 to 3, the seawater supply unit 120 includes a seawater pump 122 pumping seawater from outside of the ship through a sea chest 121 and supplying the seawater to the seawater injection module, and a seawater adjustment valve 124 adjusting the amount of seawater injecting from the seawater injection module by adjusting the seawater supply amount in a seawater supply tube 123 connected from the seawater pump 122 to the seawater injection module.

For reference, depending on whether the ship is docked or underway and on the depth of water, seawater may be supplied to the seawater pump 122 selectively through a high sea chest, which introduces seawater in the upper part, or a low sea chest, which introduces seawater in the lower part. In other words, when the ship is docked, the high sea chest is used to introduce upper seawater that is cleaner than lower seawater, and when the ship is underway, the low sea chest is used to introduce lower seawater that is cleaner than upper seawater.

Herein, the seawater pump 122 may be a quenching seawater pump, and the seawater adjustment valve 124 may be a manual operation type diaphragm valve or a solenoid type valve to adjust the amount of seawater and may adjust the spray amount of seawater via the seawater injection module according to the amount of exhaust gas.

For example, depending on the amount of exhaust gas introduced into the scrubber 110, the seawater pump 122 or the seawater adjustment valve 124 is selectively operated to adjust the seawater injection amount, thereby optimizing electric power consumption.

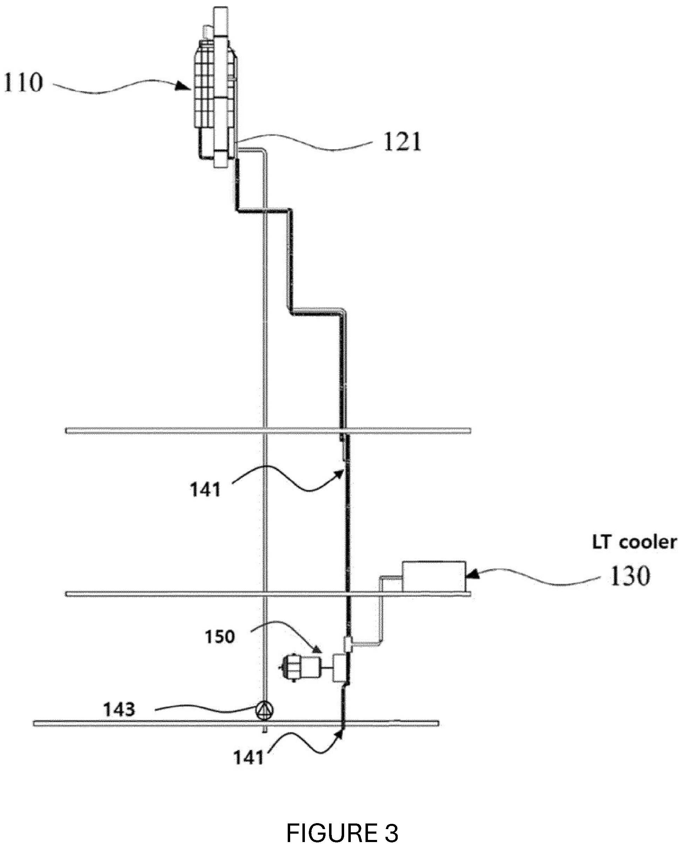

Next, referring to FIGS. 1 to 3, the cooler 130 supplies and recovers cooling water, such as seawater, etc., to cool the engine. For example, the cooler 130 may be a low temperature (LT) cooler (referring to FIG. 3) and may allow waste seawater that is used to cool the engine to be reused by the water treatment unit 140. FIG. 3 shows an example in which the LT cooler is used as the cooler 130.

Next, the water treatment unit 140 is configured to treat cleaning water so that it meets the overboard discharge criteria of cleaning water. Referring to FIGS. 1 to 3, cleaning water is treated by agitating it in the cleaning water discharge tube 141, which communicates with the outlet of the scrubber 110, with cooled seawater supplied by being branched from the cooler 130 via an agitator, so that the cleaning water is temporarily stored in a temporary storage tank (not shown) or discharged from the ship according to IMO discharge criteria.

Next, the hydroelectric power generation unit 150 is configured to generate hydroelectric power using the head of the cleaning water as it falls along the cleaning water discharge tube 141. Referring to FIGS. 1 to 3, as described above, the scrubber 110 is installed on a side surface of the upper end portion of the smoke stack, and the hydroelectric power generation unit 150 is disposed on the lowest deck of the ship or a deck with an engine room, thereby rotating the turbine using the head of the cleaning water flowing along the cleaning water discharge tube 141 connected from the scrubber 110 to the hydroelectric power generation unit 150 to generate electric power.

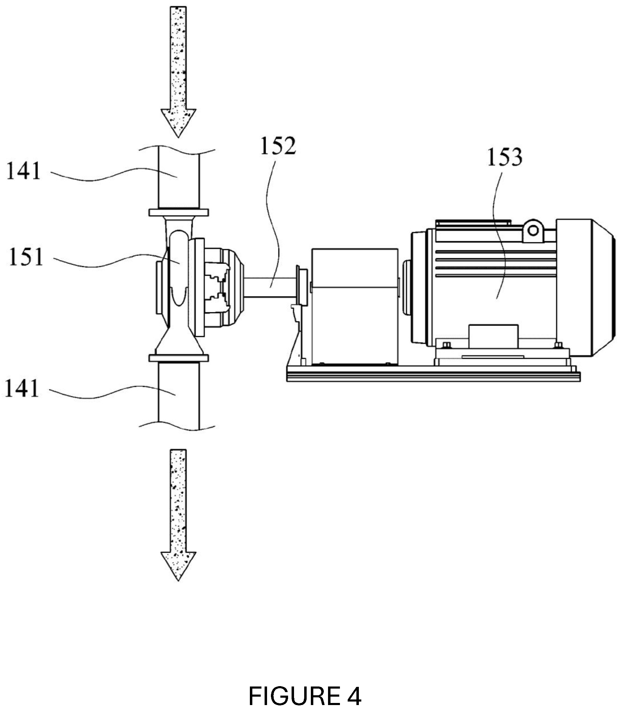

In other words, as shown in FIGS. 3 and 4, the cleaning water discharge tube 141 may include a vertical tube formed upright through two or more decks to maintain a predetermined flow rate or more required for power generation, and the turbine of the hydroelectric power generation unit 150 may be connected to a terminal end of the vertical tube.

For example, the hydroelectric power generation unit 150 is formed at the cleaning water discharge tube 141 at a rear end of the water treatment unit 140, and rotates the turbine with diluted water produced by diluting sulfur oxides, corrosive substances such as particulate matter or fine dust with seawater to minimize corrosion of the turbine or attachment of contaminant, and generating power in hydraulic turbine generation using the head of the cleaning water that falls from the scrubber 110 along the cleaning water discharge tube 141 and storing the generated power amount directly or in a battery to supply the power to the seawater supply unit 120, the cooler 130, or the water treatment unit 140, thereby reducing the power amount supplied from the generation engine and minimizing greenhouse gas emission.

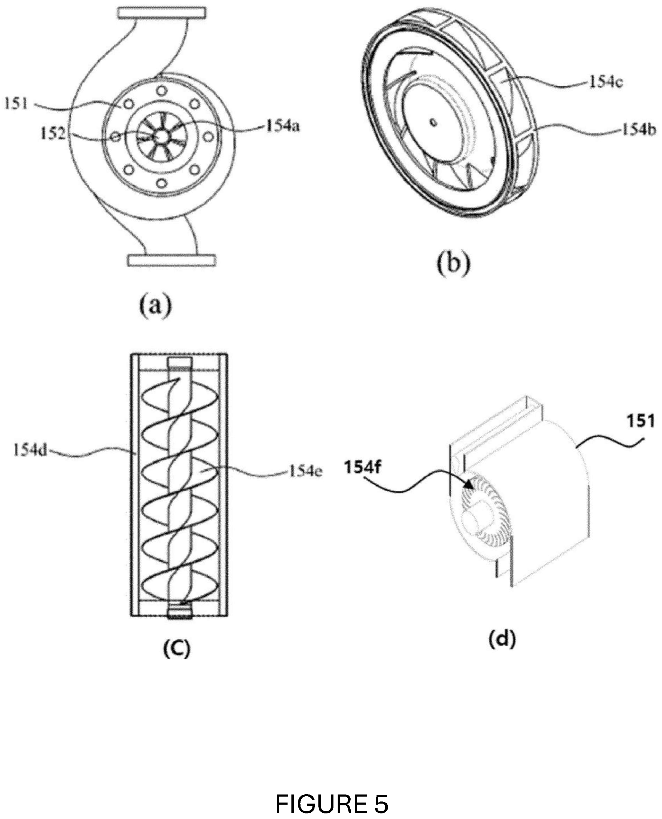

Specifically, referring to FIGS. 4 and 5, the hydroelectric power generation unit 150 may include a turbine cover 151 having an inlet and an outlet to communicate with the cleaning water discharge tube 141, the turbine rotatably coupled to the turbine cover 151 and rotated by the cleaning water that is introduced through the inlet and falls and is discharged through the outlet, and a generation module 153 generating electric power by a coil and a permanent magnet formed at a rear end of a shaft 152 of the turbine.

The hydroelectric power generation unit shown in FIG. 5 is a hydroelectric power generation unit that serves as an agitator, agitating cold water supplied from the LT cooler (i.e., the cooler 130) with the cleaning water in the cleaning water discharge tube and performing hydroelectric power generation. In other words, the hydroelectric power generation unit with a function of an agitator may have the form of hydraulic turbine generation as shown in FIG. 5, but is not limited thereto.

As shown in FIG. 5, the turbine may include a blade 154a coupled to the shaft 152 (referring to FIG. 5a), a blade 154c formed on an outer circumferential surface of a rotation frame 154b rotated in a cylindrical rotation space formed in the turbine cover 151 (referring to FIG. 5b), or a screw-type blade 154e straightly inserted into and rotated in a rotation guide tube 154d coupled to and located between the inlet and the outlet (referring to FIG. 5c).

Furthermore, as shown in FIG. 5d, a blade 154f formed in the turbine cover has a cylindrical structure. The blade 154f is rotated by a force generated when the cleaning water flows along the cleaning water discharge tube 141, and a blade shaft is connected to a generator shaft, so that the blade 154f converts rotational motion into electrical energy to generate electricity. A turbine cover 151 is an exterior part that protects mechanical components related to the turbine blade 154f and serves to allow water to flow through the turbine at a certain pressure.

Furthermore, the above-described blade may be made of an aluminium alloy material having good oxidation resistance or corrosion resistance, or a surface of the blade may be coated with aluminium-zinc alloy.

Furthermore, not shown in the drawings, when the blade is rotated, seawater supplied from the cooler 130, purified water treated by the water treatment unit 140, or separate fresh water is injected toward the blade to additionally dilute the cleaning water and add rotating force, thereby minimizing corrosion of the blade.

Furthermore, referring to FIG. 1, a storage tank 181 temporarily stores a certain volume of cleaning water discharged from the scrubber 110, and when the ship is docked, and even when the main engine or the generation engine is not operated, the turbine may be operated using the head of the cleaning water of the storage tank 181.

Meanwhile, the water treatment unit 140 and the hydroelectric power generation unit 150 may be provided separately from each other, but the hydroelectric power generation unit 150 may only be provided to replace the agitator of the water treatment unit 140 with the turbine of the hydroelectric power generation unit 150, so that the hydroelectric power generation unit 150 generates electric power only with the turbine thereof and treats the cleaning water by agitating it and seawater.

Next, the monitoring unit 160 controls the seawater supply unit 120, the cooler 130, and the water treatment unit 140, monitors each load of the seawater pump 122 of the seawater supply unit 120, the cooler 130, and the water treatment unit 140, and the generation power amount of the hydroelectric power generation unit 150, and distributing and supplying generated power according to each load of the seawater pump 122 of the seawater supply unit 120, the cooler 130, and the water treatment unit 140, thereby supplementing power supplied by the generation engine.

Meanwhile, referring to FIGS. 1 to 3, the scrubber system includes a cleaning water branch tube 171 branched from the cleaning water discharge tube 141 at a rear end of the water treatment unit 140, and an auxiliary water treatment unit 172 coupled to the cleaning water branch tube 171. The monitoring unit 160 discharges the cleaning water outward of the ship by allowing the cleaning water to bypass the hydroelectric power generation unit 150 along the cleaning water branch tube 171, according to each load of the seawater supply unit 120, the cooler 130, and the water treatment unit 140, so that the cleaning water may bypass when generation of the hydroelectric power generation unit 150 is unnecessary.

Therefore, the scrubber system having a hydroelectric power generation unit using exhaust gas cleaning water configured as described above generates electric power via the turbine using the head of cleaning water used in the scrubber and supplies it to places where it is required.

The embodiment described in the present specification and configurations shown in the drawings are only exemplary embodiments of the present disclosure, but do not represent all the technical ideas of the present disclosure. Therefore, it should be understood that there may be various equivalents and modifications that can be substituted for them at the time of filing the present application.

## Claims

1. A scrubber system having a hydroelectric power generation unit using exhaust gas cleaning water, the scrubber system comprising:
a scrubber comprising a scrubber casing panel provided at a side surface of a smoke stack discharging exhaust gas discharged from an engine of a ship outward, a seawater injection module injecting seawater into introduced exhaust gas branched to the scrubber casing panel to dissolve sulfur oxides while cooling exhaust gas, and an outlet formed on a lower surface of the scrubber casing panel and discharging cleaning water used to clean exhaust gas;
a seawater supply unit comprising a seawater pump pumping seawater from outside of the ship through a sea chest and supplying the seawater to the seawater injection module, and a seawater adjustment valve adjusting the supply amount of seawater in a seawater supply tube connected from the seawater pump to the seawater injection module to adjust the injection amount of the seawater injection module;
a cooler supplying cooling water to cool the engine and recover the cooling water;
a water treatment unit treating cleaning water in a cleaning water discharge tube communicating with the outlet of the scrubber by agitating it with cooling water supplied from the cooler, and discharging the treated cleaning water from the ship;
a hydroelectric power generation unit formed at the cleaning water discharge tube at a rear end of the water treatment unit, and storing the amount of power generated by hydraulic turbine generation using the head of cleaning water falling from the scrubber along the cleaning water discharge tube directly or in a battery to supply the generation power amount to the seawater supply unit, the cooler, or the water treatment unit; and
a monitoring unit controlling the seawater supply unit, the cooler, and the water treatment unit, monitoring each load of the seawater supply unit, the cooler, and the water treatment unit, and the generation power amount of the hydroelectric power generation unit, and distributing the generation power amount according to each load.

2. The scrubber system of claim 1, wherein the hydroelectric power generation unit comprises a turbine cover comprising an inlet and an outlet to communicate with the cleaning water discharge tube, a turbine rotatably coupled to the turbine cover and rotated by cleaning water, which is introduced through the inlet and falls and is discharged through the outlet, and a generation module generating power by a coil and a permanent magnet formed at a rear end of a shaft of the turbine.

3. The scrubber system of claim 2, wherein the turbine comprises a blade coupled to the shaft, a blade formed on an outer circumferential surface of a rotation frame rotated in a cylindrical rotation space formed in the turbine cover, or a screw-type blade inserted into and rotated in a rotation guide tube coupled to and located between the inlet and the outlet.

4. The scrubber system of claim 3, wherein the cleaning water discharge tube comprises a vertical tube formed upright through two or more layers of decks, and the turbine is coupled to a terminal end of the vertical tube.

5. The scrubber system of claim 1, further comprising:
a cleaning water branch tube branched from the cleaning water discharge tube at a rear end of the water treatment unit, and an auxiliary water treatment unit coupled to the cleaning water branch tube,
wherein the monitoring unit allows cleaning water to be discharged from the ship by bypassing the hydroelectric power generation unit through the cleaning water branch tube according to each load of the seawater supply unit, the cooler, and the water treatment unit.

6. The scrubber system of claim 1, wherein the hydroelectric power generation unit is disposed at the bottom deck of a body of the ship.

7. The scrubber system of claim 1, wherein the turbine of the hydroelectric power generation unit replaces a function of an agitator of the water treatment unit.
